# FASCICULE DE BREVET EUROPEEN

(11) **EP 2 408 658 B1**
(45) Date de publication et mention de la délivrance du brevet: **16.04.2014**
(21) Numéro de dépôt: 10711432.4
(22) Date de dépôt: 10.03.2010
(51) Int. Cl.: B62H 3/08

(54) **DISPOSITIF D' ATTACHE SECURISE DE VEHICULES ELECTRIQUES**
SICHERE BEFESTIGUNGSVORRICHTUNG FÜR ELEKTROFAHRZEUGE
SECURE ATTACHMENT DEVICE FOR ELECTRIC VEHICLES

(30) Priorité: 16.03.2009 FR 0901196
(43) Date de publication de la demande: 25.01.2012
(73) Titulaire: Clean Energy Planet, 06410 Biot (FR)
(72) Inventeur: SECKLER, Céline, F-06410 Biot (FR); GAUTHEYRIE, Pascal, F-75015 Paris (FR); COUPEZ, Jean Luc, F-59286 Roost Warendin (FR)
(74) Mandataire: Maupilier, Didier
(86) Numéro de dépôt international: PCT/FR2010/000196
(87) Numéro de publication internationale: WO 2010/106238

(56) Documents cités:
- EP-A- 0 902 523
- EP-A1- 2 168 848
- WO-A-01/54080
- WO-A2-98/09254
- FR-A- 2 828 665
- FR-A- 2 915 170
- GB-A- 2 026 876
- JP-A- 10 075 535
- JP-A- 2006 001 480

## Description

### Domaine technique

La présente invention concerne les systèmes de véhicules électriques tels que des vélos électriques mis à la disposition du public en général ou de groupes de personnes en particulier, et concerne en particulier un dispositif d'attache sécurisé de véhicule électrique ainsi que la station de stationnement de tels véhicules.

### Etat de la technique

Aujourd'hui, dans les agglomérations et entre pôles de déplacements obligatoires hors urbains, la sécurité physique des usagers, la diminution des pollutions atmosphérique et sonore, ou encore la préservation du cadre de vie sont autant de préoccupations qui conduisent à la création de zones piétonnes.

On a donc songé à proposer une alternative aux déplacements pédestres dans les villes et dans les zones où les véhicules à moteurs thermiques sont de moins en moins supportables pour la qualité environnementale, dans les entreprises pour proposer des solutions alternatives aux déplacements domicile/travail ou pendant la journée pour la restauration locale, les courses ou le sports en mettant des véhicules tels que des vélos ou des scooters à la libre disposition des utilisateurs.

Beaucoup de villes ont mis des vélos à la disposition des usagers. Mais le vélo classique présente un inconvénient majeur pour son utilisateur du fait qu'il faut fournir un effort dans les côtes dès que la pente atteint 4% ou sur longues distances. C'est pourquoi il existe maintenant des vélos à assistance électrique qui permettent d'éviter cet inconvénient. Ce type de vélo dispose d'un petit moteur de puissance réduite (250 W) alimenté par une batterie. Le moteur ne fonctionne que lorsque l'utilisateur pédale. Son alimentation par la batterie se coupe dès que l'utilisateur actionne les freins ou qu'il cesse de pédaler. Il va de soi que la batterie (généralement au lithium) qui équipe un tel vélo à assistance électrique est légère et de dimensions réduites. Par conséquent, elle dispose d'une charge réduite et doit être rechargée fréquemment. La recharge peut être effectuée au moyen d'une borne de recharge sur laquelle l'utilisateur branche le câble d'alimentation de la batterie de son vélo électrique afin d'augmenter l'autonomie sans charge emportée supplémentaire.

Aujourd'hui, les vélos mis à la disposition du public dans les villes sont parqués dans des stations en plein air où les vélos sont attachés. Malheureusement, les dispositifs d'attache n'empêchent pas les nombreux vols de vélos rendus faciles du fait que le dispositif d'attache est placé généralement sur le cadre du vélo et peut être coupé facilement à l'aide d'une disqueuse.

Un autre inconvénient est que la plupart des systèmes actuels mis en place dans les villes ne sont pas adaptés aux vélos électriques. En effet, dans ces vélos, le moteur se trouve au centre de la roue avant ou quelquefois au centre de la roue arrière. La roue comportant le moteur, d'un prix relativement élevé, n'est donc pas sécurisée et peut facilement être volée. Il existe cependant un système décrit dans le document FR 2915170, présentant les caractéristiques du préambule de la revendication 1, qui comporte des moyens de blocage aptes à passer d'une position escamotée d'ouverture à une position de blocage de la roue par enserrement des extrémités de son axe de rotation.

Toutefois, avec les vélos électriques, il n'est pas aisé pour l'utilisateur de trouver une station comportant des bornes adéquates disposant d'un chargeur adapté pour recharger sa batterie au lithium du vélo.

### Exposé de l'invention

C'est pourquoi le but de l'invention est de réaliser un dispositif d'attache de véhicule électrique à deux ou trois roues qui permet d'effectuer simultanément le blocage sécurisé du véhicule empêchant le vol du véhicule et la recharge automatique de la batterie du véhicule.

Un autre but de l'invention est de réaliser une station de véhicules électriques à deux ou trois roues comprenant une pluralité d'emplacements disposant chacun d'un dispositif d'attache sécurisé adapté aux caractéristiques spécifiques de chaque véhicule.

L'objet de l'invention est donc un dispositif d'attache sécurisé d'un véhicule électrique deux roues ou trois roues disposant d'une batterie d'alimentation, comprenant un moyen d'attache du véhicule et d'un moyen de recharge de la batterie. Le moyen d'attache comprend deux premiers éléments de blocage se faisant face et comprenant des moyens de poussée adaptés pour exercer une force de poussée sur chacun des éléments de blocage pour que ceux-ci appliquent cette force de poussée sur les extrémités du moyeu de la roue se trouvant entre les éléments de blocage de manière à bloquer ainsi le véhicule électrique en maintenant la force de poussée. Chacun des éléments de blocage comporte des contacts connectés aux fils d'un câble relié aux bornes du moyen de recharge de la batterie, les contacts étant adaptés pour se connecter à des contacts situés à chacune des extrémités du moyeu de la roue et connectés aux fils d'un câble relié aux bornes de la batterie du véhicule, ce qui permet la connexion de la batterie au moyen de recharge par l'intermédiaire des câbles de manière à obtenir le chargement automatique de la batterie au moment du blocage du véhicule électrique à son emplacement.

### Description brève des figures

Les buts, objets et caractéristiques de l'invention apparaîtront plus clairement à la lecture de la description qui suit faite en référence aux dessins dans lesquels :
la figure 1 est une représentation schématique d'une station de stationnement de vélos électriques selon l'invention ;
la figure 2 représente schématiquement un vélo électrique bloqué dans un emplacement de la station ;
la figure 3 est une représentation en coupe du dispositif d'attache selon un premier mode de réalisation de l'invention ;
la figure 4 est une représentation en coupe du dispositif d'attache selon un second mode de réalisation de l'invention ;
la figure 5 est une vue en élévation de la borne de gestion de la station illustrée sur la figure 1; et
la figure 6 est un bloc diagramme de l'élément de gestion se trouvant dans la borne de gestion.

### Description détaillée de l'invention

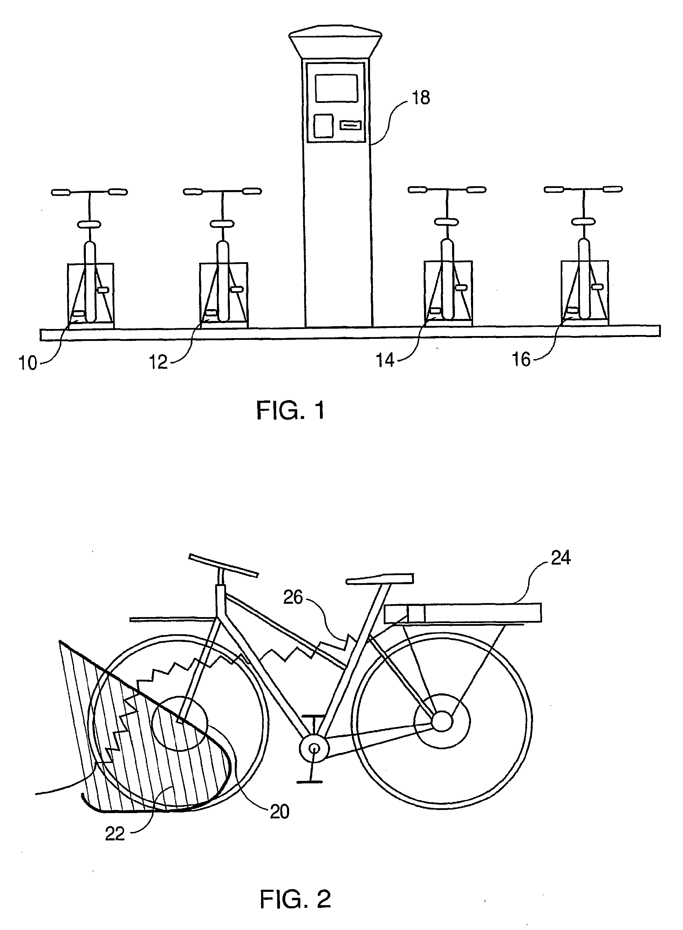

En référence à la figure 1, une station de stationnement de vélos électriques selon l'invention est constituée d'une pluralité d'emplacements où sont stationnés les vélos tels que les emplacements 10, 12, 14 et 16. Lorsqu'un vélo est placé dans un emplacement, il est bloqué par un dispositif d'attache selon l'invention et sa batterie peut être rechargée. Le blocage des vélos et le chargement de la batterie s'effectuent sous le contrôle d'une borne de gestion 18 comme on le verra par la suite.

A noter que les emplacements de la station peuvent être adaptés pour le stationnement de scooters électriques ou de véhicules électriques à trois roues.

Lorsqu'il est stationné, chaque vélo électrique illustré schématiquement sur la figure 2 a sa roue ou arrière bloquée par un dispositif d'attache 20 de chaque côté de la roue du vélo. Le dispositif de blocage fait partie d'un support de vélo 22 fixé au sol. Chaque vélo électrique dispose d'une batterie 24, de préférence une batterie au lithium relativement légère (ou autre type). Lorsque le vélo est en stationnement, la batterie est rechargée si nécessaire grâce à un câble 26 connecté à la batterie 24 et à un chargeur (non montré) qui est intégré dans le support 22. A noter que le chargeur peut être intégré dans la borne de gestion 18 de façon à alimenter tous les emplacements.

Comme on le verra par la suite, la connexion au chargeur peut être incorporée dans le dispositif d'attache 20. Dans ce cas, il n'est pas nécessaire de connecter le câble 26 à la batterie, ce câble étant incorporé dans les éléments métalliques du vélo. Le chargement de la batterie s'effectue alors automatiquement lorsque la roue du vélo est bloquée par le dispositif d'attache 20.

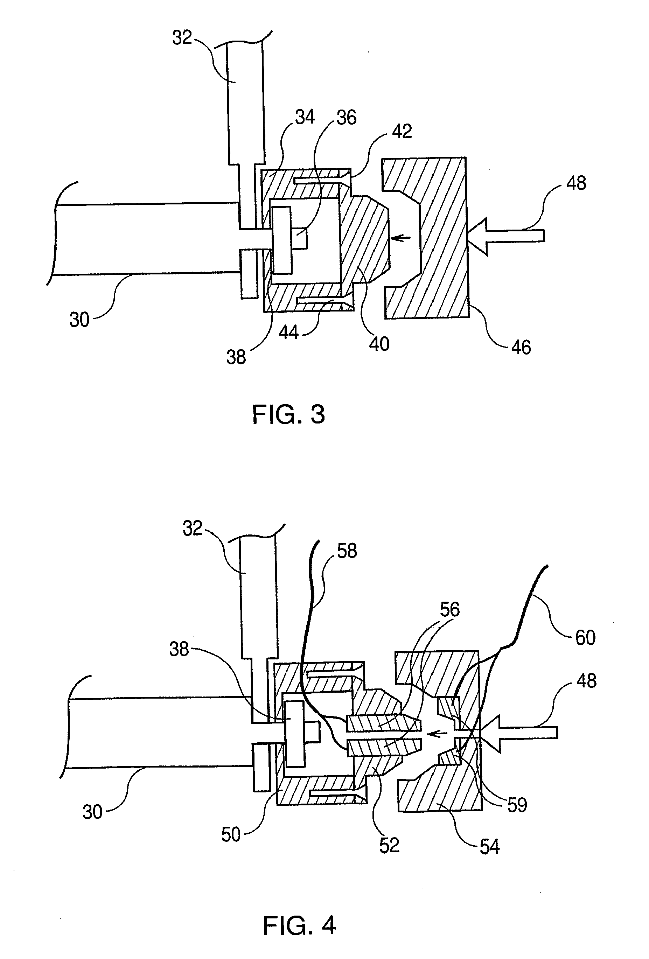

Le dispositif d'attache 20 est illustré en coupe sur la figure 3. Il est composé de 2 parties, un élément tronconique mâle intégré au vélo et un second élément tronconique femelle solidaire du support 22.

Le moyeu 30 de la roue sur lequel est fixé la fourche 32 comporte un élément mâle à chacune de ses extrémités. L'élément mâle est constitué d'une partie creuse 34 et d'un élément de forme tronconique 40 qui ferme la partie creuse au moyen de vis 42 et 44. La partie creuse 34 est traversée par l'extrémité 36 du moyeu. Cette extrémité comporte un pas de vis et est bloquée dans la partie creuse 34 au moyen d'un écrou 38.

L'élément tronconique mâle 40, solidaire du moyeu de la roue, est complémentaire d'un élément tronconique femelle 46 dont la surface intérieure s'ajuste parfaitement à la forme tronconique de l'élément 40. Lorsque le vélo électrique est stationné à un emplacement, la roue comportant le dispositif de blocage, qui est généralement la roue avant incorporant le moteur, est placée de telle façon que l'élément mâle 40 soit au droit de l'élément femelle 46. Une force est alors exercée par un moyen de poussée 48 sur l'élément 46 qui vient s'appliquer sur l'élément 40. Une force est appliquée simultanément à l'autre extrémité du moyeu de la roue qui comporte un élément mâle identique. De la sorte, le vélo se trouve immobilisé dans la position verticale du fait que les forces de poussée de part et d'autre de l'axe de la roue, sont maintenues en permanence. A noter que les forces de poussée sont appliquées généralement à l'aide de vérins et de moteurs électriques mais que tout autre moyen équivalent pourrait être utilisé.

Le mode de réalisation préférentiel du blocage du vélo est illustré sur la figure 4. De la même façon que précédemment, le blocage est réalisé par l'application sur un élément tronconique mâle comportant une partie creuse fixée sur le moyeu 30 de la roue par un écrou 38 et un élément de forme tronconique 52, d'un élément femelle 54.

Dans ce mode de réalisation, l'élément tronconique mâle comprend 2 contacts mâles 56 connectés aux 2 fils d'un câble 58 relié aux bornes de la batterie. L'élément tronconique femelle 54 comporte également 2 contacts femelles 59 de forme complémentaire à celle des contacts mâles 56. Ces 2 contacts femelles sont connectés aux 2 fils d'un câble 60 relié aux bornes d'un chargeur.

De la même façon que précédemment, une force de poussée est exercée de chaque côté de la roue par un moyen de poussée 48 tel qu'un vérin. Sous cette poussée, l'élément femelle 54 vient s'appliquer sur l'élément tronconique 52. Les contacts femelles 58 viennent alors en contact avec las contacts mâles 56, ce qui permet la connexion de la batterie au chargeur par l'intermédiaire des câbles 58 et 60. Par conséquent, au moment du blocage du vélo à son emplacement, il y a simultanément chargement automatique de la batterie si nécessaire.

A noter qu'une première variante du mode de réalisation qui vient d'être décrit consiste à connecter une des connexions de la batterie au contact unique 56 (qui n'est pas divisé en 2 parties) et à connecter l'autre connexion de la batterie au contact mâle unique qui se trouve de l'autre côté de la roue. Dans ce cas, une des connexions du chargeur est connectée au contact femelle unique 60 (qui n'est pas divisé en 2 parties) et l'autre connexion du chargeur est connectée au contact unique qui se trouve de l'autre côté de la roue.

Une seconde variante sur le même principe consiste en une surface de cuivre autour de l'élément conique mâle avec correspondance sur l'élément femelle qui, lorsqu'ils sont en contact en fin de poussée, permettent de charger la batterie. L'élément conique femelle 54 possède une petite brosse pour nettoyer le contact male 56 des possibles salissures

Dans les modes de réalisation illustrés par les figures 3 et 4, le dispositif de blocage est composé d'un élément tronconique mâle et d'un élément tronconique femelle qui s'ajustent parfaitement. Contrairement aux dispositifs utilisés aujourd'hui, un tel dispositif est très difficile à fracturer ou scier et rend quasiment impossible le vol du vélo. Il va de soi que tout autre dispositif dans lequel un élément femelle ou mâle solidaire du moyeu du vélo vient s'ajuster à un élément complémentaire, mâle ou femelle, solidaire du support, pourrait être utilisé.

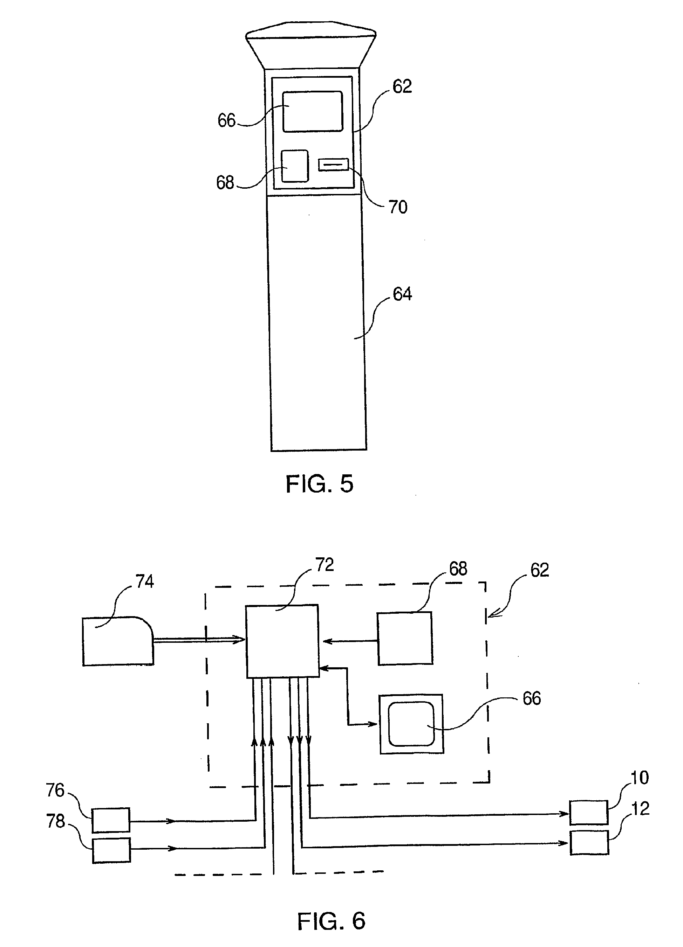

En référence à la figure 5, la borne de gestion 18 comprend principalement un élément supérieur 62 destiné au contrôle de la station et un pied 64 fixé au sol et pouvant comporter un éclairage de balisage et des publicités.

L'élément de contrôle 62 comprend un écran 66 de préférence tactile, qui permet l'affichage des conditions d'emprunt des vélos et l'affichage des vélos disponibles avec des informations sur la charge des batteries donnant ainsi la possibilité de choisir le vélo qui a la batterie la plus chargée.

L''élément de contrôle 62 comprend également un lecteur 68 pour la lecture d'un badge RFID sans contact fourni aux utilisateurs potentiels par l'organisme gérant la station de sorte que l'utilisateur doit passer son badge devant le lecteur 68 pour être identifié. L'élément de contrôle comporte également une fente 70 pour l'introduction d'une carte de crédit classique par l'utilisateur pour le paiement à effectuer en contrepartie de l'emprunt d'un vélo électrique.

La figure 6 illustre le fonctionnement de l'élément de contrôle 62 qui comprend pour ceci un processeur 72 tel qu'un micro-ordinateur. Lorsque l'utilisateur potentiel a présenté son badge RFID devant le lecteur 68, il doit payer au moyen de sa carte de crédit qu'il introduit dans la fente 70 après que la commande a été affichée sur l'écran 66.

Le processeur 72 est connecté à tous les emplacements de vélos. Ainsi, il est connecté aux emplacements 10 et 12. Lorsqu'un utilisateur a déposé son vélo à un emplacement déterminé, s'est identifié et a désigné l'emplacement choisi, le processeur 72 envoie une commande au dispositif d'attache de l'emplacement et une commande de recharge de la batterie si le mode de réalisation illustré sur la figure 4 est utilisé.

Le processeur 72 reçoit également les informations sur le niveau de charge des batteries des vélos qui sont stationnés. Ainsi, il reçoit les informations de charge des batteries 76 et 78. Ceci permet à l'utilisateur de choisir, grâce à l'écran tactile 66, le vélo dont la batterie a le niveau de charge le plus élevé.

A noter que, selon une variante de l'invention, la station peut disposer de panneaux photovoltaïques permettant de fournir l'alimentation électrique aux chargeurs des batteries.

La station de vélos électriques selon l'invention ayant une pluralité d'emplacements comportant chacun un dispositif d'attache décrit ci-dessus, a vocation à être utilisée comme station de transport d'extrémité, c'est-à-dire en complément à un moyen de transport tel que la voiture, le train ou l'avion. Ainsi, elle peut être installée dans les locaux d'une entreprise pour permettre aux employés de l'entreprise de se rendre au restaurant collectif à l'heure du déjeuner. Elle peut également être installée dans une gare de façon à permettre aux voyageurs d'affaires se déplaçant sans bagages encombrants de se rendre à leur point de rendez-vous, ou dans les locaux d'un hôtel pour permettre aux clients de l'hôtel de visiter la ville ou les alentours. Enfin, une telle station sera très utile pour les collectivités telles que les villes qui, aujourd'hui, sont de plus en plus nombreuses à mettre des vélos à la disposition des habitants désirant se déplacer à l'intérieur de la ville.

## Revendications

1. Dispositif d'attache sécurisé d'un véhicule électrique à deux roues ou à trois roues disposant d'une batterie d'alimentation (24), ledit dispositif comprenant un moyen d'attache (22) du véhicule comprenant deux premiers éléments de blocage (46 ou 54) se faisant face et comprenant des moyens de poussée (48) adaptés pour exercer une force sur le moyeu (30) de la roue se trouvant entre lesdits éléments de blocage de manière à bloquer ainsi ledit véhicule électrique en maintenant ladite force ;
ledit dispositif d'attache étant **caractérisé en ce qu'**il comprend un moyen de recharge de ladite batterie du véhicule, et **en ce que** chacun desdits éléments de blocage (46 ou 54) comporte des contacts (59) connectés aux fils d'un câble (60) relié aux bornes dudit moyen de recharge de la batterie, lesdits contacts étant adaptés pour se connecter à des contacts situés à chacune des extrémités dudit moyeu de la roue et connectés aux fils d'un câble (58) relié aux bornes de ladite batterie (24) du véhicule, ce qui permet la connexion de ladite batterie audit moyen de recharge par l'intermédiaire desdits câbles (58 et 60) de manière à obtenir le chargement automatique de ladite batterie au moment du blocage dudit véhicule électrique.

2. Dispositif d'attache selon la revendication 1, dans lequel ledit premiers éléments de blocage (46 ou 54) ont une forme d'un genre prédéterminé, mâle ou femelle, et sont adaptés pour recevoir des seconds éléments de blocage (40 ou 52) situés aux extrémités dudit moyeu (30) de la roue et solidaires dudit moyeu (30), lesdits seconds éléments de blocage ayant une forme d'un genre complémentaire audit genre prédéterminé de manière à les rendre solidaire desdits premiers éléments de blocage lorsque ladite force de poussée est appliquée.

3. Dispositif selon la revendication 2, dans lequel lesdits premiers éléments de blocage (46 ou 54) ont une forme tronconique femelle et lesdits seconds éléments de blocage (40 ou 52) situés aux extrémités dudit moyeu (30) de la roue dudit véhicule, ont une forme tronconique mâle.

4. Dispositif selon la revendication 2 ou 3, dans lequel chacun desdits seconds éléments de blocage (40 ou 52) de chaque côté de la roue comprend un contact mâle (56) connecté à chacun des deux fils du câble (58) relié aux bornes de ladite batterie (24) du véhicule et chacun desdits premiers éléments de blocage (46 ou 54) comporte également un contact femelle (59) de forme complémentaire à celle dudit contact mâle, lesdits contacts femelles étant connectés aux deux fils du câble (60) relié aux bornes dudit moyen de recharge de la batterie.

5. Station comprenant une pluralité d'emplacements (10, 12, 14, 16) destinés chacun au stationnement d'un vélo électrique ou similaire, chacun desdits emplacements comportant un dispositif d'attache selon l'une des revendications 1 à 4, ladite station comprenant en outre une borne de gestion (18) adaptée pour la gestion et le contrôle des vélos électriques stationnés dans lesdits emplacements.

6. Station selon la revendication 5, dans laquelle ladite borne de gestion (18) comprend un élément de contrôle (62) comportant un écran (66) qui permet l'affichage des conditions d'emprunt des vélos et l'affichage des vélos disponibles avec des informations sur la charge de leur batterie donnant ainsi la possibilité de choisir le vélo qui a la batterie la plus chargée.

7. Station selon la revendication 6, dans laquelle ledit écran (66) est un écran tactile.

8. Station selon la revendication 7, dans laquelle ledit élément de contrôle (62) comprend un lecteur (68) pour la lecture d'un badge RFID sans contact fourni aux utilisateurs potentiels de manière à ce qu'un utilisateur passe son badge devant ledit lecteur pour être identifié, et comporte également une fente (70) pour l'introduction d'une carte de crédit par l'utilisateur pour le paiement à effectuer en contrepartie de l'emprunt d'un vélo électrique.

9. Station selon l'une des revendications 6, 7 ou 8, dans laquelle ledit élément de contrôle comprend un processeur (72) connecté à tous lesdits emplacements (10, 12, 14, 16) de sorte que, lorsqu'un utilisateur a déposé son véhicule électrique à un emplacement déterminé, s'est identifié et a désigné l'emplacement choisi, ledit processeur envoie une commande au dispositif d'attache de l'emplacement et une commande de recharge de la batterie dudit véhicule.

10. Station selon l'une quelconque des revendications 5 à 9, comprenant en outre au moins un véhicule électrique à deux roues ou à trois roues disposant d'une batterie d'alimentation (24), une roue dudit véhicule comportant un moyeu (30), le véhicule électrique comportant des contacts situés à chacune des extrémités dudit moyeu de roue, lesdits contacts étant connectés aux fils d'un câble (58) relié aux bornes de ladite batterie.

11. Station selon la revendication 10, dans laquelle les extrémités dudit moyeu (30) portent, chacune, un élément de blocage de forme tronconique mâle.

12. Station selon la revendication 11, dans laquelle chacun desdits éléments de blocage (40 ou 52) comprend un contact mâle (56) connecté à chacun des deux fils du câble (58) relié aux bornes de ladite batterie (24) du véhicule.

## Patentansprüche

1. Gesicherte Befestigungsvorrichtung für ein Elektrofahrzeug mit zwei Rädern oder mit drei Rädern, umfassend eine Versorgungsbatterie (24), wobei die besagte Vorrichtung ein Mittel zur Befestigung (22) des Fahrzeugs und ein Mittel zum Aufladen der besagten Batterie umfasst, und das besagte Befestigungsmittel zwei erste Blockierelemente (46 oder 54) umfasst, die einander gegenüber liegen und Mittel zum Schieben (48) umfassen, die sich zur Ausübung einer Kraft auf die Nabe (30) des Rades eignen, die sich zwischen den besagten Blockierelementen befinden, um so das besagte Elektrofahrzeug zu blockieren, indem die besagte Kraft aufrecht erhalten wird;
wobei die besagte Befestigungsvorrichtung **dadurch gekennzeichnet ist, dass** jedes der besagten Blockierelemente (46 oder 54) Kontakte (59) umfasst, die mit den Leitungen eines Kabels (60) verbunden sind, das an die Klemmen des besagten Mittels zum Aufladen der Batterie angeschlossen ist, und die besagten Kontakte an die Kontakte angeschlossen werden können, die sich an jedem Ende der besagten Nabe des Rades befinden, und mit den Leitungen eines Kabels (58) verbunden sind, das mit den Klemmen der besagten Batterie (24) des Fahrzeugs verbunden ist, wodurch die Batterie über die besagten Kabel (58 und 60) so mit dem besagten Mittel zum Aufladen verbunden werden kann, dass die automatische Aufladung der besagten Batterie zu dem Zeitpunkt erfolgt, an dem man das besagte Elektrofahrzeug blockiert.

2. Befestigungsvorrichtung nach Anspruch 1, bei der die besagten ersten Blockierelemente (46 oder 54) eine Form in einer vorbestimmten Art, als Stecker oder Dose, aufweisen, und in der Lage sind, die zweiten Blockierelemente (40 oder 52) aufzunehmen, die an den Enden der besagten Nabe (30) des Rades angeordnet, und fest mit der Nabe verbunden sind, und die besagten zweiten Blockierelemente eine Form einer ergänzenden Art zur besagten vorbestimmten Art aufweisen, sodass sie fest mit den ersten Blockierelementen verbunden werden, sobald die besagte Schubkraft angewandt wird.

3. Vorrichtung nach Anspruch 2, bei der die besagten ersten Blockierelemente (46 oder 54) eine kegelige Dosenform aufweisen und die besagten zweiten Blockierelemente (40 oder 52), die an den Enden der besagten Nabe (30) des Rades des besagten Fahrzeugs angeordnet sind, eine kegelige Steckerform aufweisen.

4. Vorrichtung nach Anspruch 2 oder 3, bei der jedes der besagten zweiten Blockierelemente (40 oder 52) beiderseits des Rades einen Steckkontakt (56) umfasst, der mit jeder der beiden Leitungen des Kabels (58) verbunden wird, das mit den Klemmen der besagten Batterie (24) des Fahrzeugs verbunden ist, und jedes der besagten ersten Blockierelemente (46 oder 54) ebenfalls einen Dosenkontakt (59) in einer dem besagten Steckkontakt ergänzenden Form umfasst, und die besagten Dosenkontakte mit den beiden Leitungen des Kabels (60) verbunden werden, das mit den Klemmen des besagten Mittels zum Aufladen der Batterie verbunden ist.

5. Station umfassend eine Vielzahl von Standplätzen (10, 12, 14, 16), die jeweils zum Abstellen eines Elektrofahrrades oder ähnlichen Fahrzeugs bestimmt sind, wobei jeder der besagten Standplätze eine Befestigungsvorrichtung nach einem der Ansprüche 1 bis 4 umfasst, und die besagte Station darüber hinaus eine Verwaltungssäule (18) umfasst, die sich zur Verwaltung und Kontrolle der Elektrofahrräder eignet, die in den besagten Standplätzen abgestellt sind.

6. Station nach Anspruch 5, bei der die besagte Verwaltungssäule (18) ein Kontrollelement (62) umfasst, das einen Bildschirm (66) enthält, auf dem die Leihbedingungen für die Fahrräder, sowie die verfügbaren Fahrräder mit Informationen über den Ladezustand ihrer Batterie angezeigt werden können, wodurch die Möglichkeit gegeben ist, jenes Fahrrad auszuwählen, dessen Batterie am stärksten aufgeladen ist.

7. Station nach Anspruch 6, bei der der besagte Bildschirm (66) ein Berührungsbildschirm ist.

8. Station nach Anspruch 7, bei der das besagte Kontrollelement (62) ein Lesegerät (68) zum Lesen eines kontaktlosen RFID Chips enthält, der den potenziellen Nutzern beigestellt wird, damit ein Nutzer seinen Chip vor das besagte Lesegerät hält, um sich auszuweisen, und es auch einen Schlitz (70) enthält, damit der Nutzer eine Kreditkarte einführen kann, um als Gegenleitung für den Verleih des Elektrofahrrades eine Gebühr zu entrichten.

9. Station nach einem der Ansprüche 6, 7 oder 8, bei der das besagte Kontrollelement einen Prozessor (72) enthält, der mit allen besagten Standplätzen (10, 12, 14, 16) verbunden ist, sodass der besagte Prozessor, wenn ein Nutzer sein Elektrofahrrad an einem bestimmten Standplatz abgestellt, sich ausgewiesen und den ausgewählten Standplatz angegeben hat, einen Befehl an die Befestigungsvorrichtung des Standplatzes ausgibt, sowie einen Befehl zum Aufladen der Batterie des besagten Fahrzeugs.

10. Elektrofahrzeug mit zwei Rädern oder mit drei Rädern, das über eine Versorgungsbatterie (24) verfügt, wobei ein Rad des besagten Fahrzeugs eine Nabe (30) umfasst, **dadurch gekennzeichnet, dass** es Kontakte umfasst, die an jedem der Enden der besagten Radnabe angeordnet sind, und die besagten Kontakte mit den Leitungen eines Kabels (58) verbunden sind, das mit den Klemmen der besagten Batterie verbunden ist.

11. Fahrzeug nach Anspruch 10, bei dem die Enden der besagten Nabe (30) jeweils ein Blockierelement in kegeliger Steckerform tragen.

12. Fahrzeug nach Anspruch 11, bei dem jedes der besagten Blockierelemente (40 oder 52) einen Steckkontakt (56) umfasst, der mit jeder der beiden Leitungen des Kabels (58) verbunden ist, das mit den Klemmen der besagten Fahrzeugbatterie (24) verbunden ist.

## Claims

1. Secure attachment device for a two- or three-wheeled electric vehicle having a power supply battery (24), said device comprising a means of attaching (22) the vehicle and a means of recharging said battery, said attachment means comprising two first blocking members (46 or 54) opposite each other and comprising pushing means (48) designed to exert a force on the hub (30) of the wheel located between said blocking members so as to thus block said electric vehicle by maintaining said force;
said attachment device being **characterized in that** each of said blocking members (46 or 54) comprises contacts (59) connected to the wires of a cable (60) connected to the terminals of said battery recharging means, said contacts being designed to be connected to contacts located at each of the extremities of said wheel hub and connected to the wires of a cable (58) connected to the terminals of said battery (24) of the vehicle, which enables said battery to be connected to said recharging means by means of said cables (58 and 60) so as to automatically recharge said battery when said electric vehicle is blocked.

2. Attachment device according to claim 1, wherein said first blocking members (46 or 54) have a predefined type of shape, male or female, and are designed to receive second blocking members (40 or 52) located at the extremities of said wheel hub (30) and secured to said hub, said second blocking members having a shape of a type complementary to said predefined type so as to make them secured to said first blocking members when said pushing force is applied.

3. Device according to claim 2, wherein said first blocking members (46 or 54) have a tapered female shape and said second blocking members (40 or 52) located at the extremities of said wheel hub (30) of said vehicle, have a tapered male shape.

4. Device according to claim 2 or 3, wherein each of said second blocking members (40 or 52) on each side of the wheel comprises a male contact (56) connected to each of two wires of the cable (58) connected to terminals of said battery (24) of the vehicle and each of said first blocking members (46 or 54) also comprises a female contact (59) of a shape complementary to that of said male contact, said female contacts being connected to the two wires of the cable (60) connected to the terminals of said battery recharging means.

5. Station comprising a plurality of stands (10, 12, 14, 16) each designed for parking an electric bicycle or similar, each of said stands comprising an attachment device according to one of claims 1 to 4, said station also comprising a management terminal (18) designed to manage and control electric bicycles parked in said stands.

6. Station according to claim 5, wherein said management terminal (18) comprises a control element (62) comprising a screen (66) that makes it possible to display the conditions for borrowing bicycles and to display the bicycles available with information about their battery charge, thus giving the opportunity to choose the bicycle that has the battery with the highest charge level.

7. Station according to claim 6, wherein said screen (66) is a touch screen.

8. Station according to claim 7, wherein said control element (62) comprises a reader (68) for reading a contactless RFID badge provided to prospective users so that a user passes his badge in front of said reader to be identified, and also comprises a slot (70) for the user to introduce a credit card in order to pay for the loan of an electric bicycle.

9. Station according to one of claims 6, 7 or 8, wherein said control element comprises a processor (72) connected to all said stands (10, 12, 14, 16) so that, when a user has dropped his electric vehicle off at a specified location, has been identified and has identified the chosen stand, said processor sends a command to the stand's attachment device and a command to charge said vehicle's battery.

10. Two- or three-wheeled electric vehicle having a power supply battery (24), one wheel of said vehicle comprising a hub (30), **characterized in that** it comprises contacts located at each of the extremities of said wheel hub, said contacts being connected to the wires of a cable (58) connected to the terminals of said battery.

11. Vehicle according to claim 10, wherein the extremities of said hub (30) each bear a blocking member with a tapered male shape.

12. Vehicle according to claim 11, wherein each of said blocking members (40 or 52) comprises a male contact (56) connected to each of two wires of the cable (58) connected to terminals of said battery (24) of the vehicle.
